# DEMANDE DE BREVET EUROPEEN

(11) **EP 2 354 052 A1**
(43) Date de publication de la demande: **10.08.2011**
(21) Numéro de dépôt: 11305099.1
(22) Date de dépôt: 01.02.2011
(51) Int. Cl.: B65G 47/71

(54) **Dispositif de distribution**

(30) Priorité: 01.02.2010 FR 1050676
(71) Demandeur: VSM Automation, 68240 Kientzheim (FR)
(72) Inventeur: Meyer, Stéphane, F - 68140, LUTTENBACH (FR)
(74) Mandataire: Rhein, Alain

(57) **Abrégé**

Dispositif de distribution, permettant d'aiguiller des objets (B) qui circulent en une ou plusieurs files, vers plusieurs voies, il est disposé entre un convoyeur d'entrée (2) sur lequel lesdits objets (B) circulent en une ou plusieurs files, les uns derrière les autres, et un convoyeur de sortie (3) comprenant une pluralité de canaux destinés à être alimentés alternativement en des groupes d'une quantité déterminée d'objets (B).

Il comprend d'une part, entre le convoyeur d'entrée (2) et le convoyeur de sortie (3), un convoyeur intermédiaire (10); d'autre part un guide rectiligne (4) constitué d'un élément dont le bord inférieur s'étend à faible distance du plan supérieur du convoyeur intermédiaire (10), tandis que le guide (4) est mobile dans le sens transversal, dans le sens longitudinal, ainsi qu'en pivotement selon un axe vertical.

## Description

La présente invention concerne un dispositif de distribution permettant d'aiguiller des objets qui circulent en une ou plusieurs files, vers plusieurs voies.

Un tel dispositif est destiné à être intercalé entre un convoyeur d'entrée sur lequel les objets circulent en une ou plusieurs files, le plus fréquemment une seule, les uns derrière les autres dans chaque file, et une pluralité de convoyeurs de sortie, ou de canaux, qu'il faut alimenter alternativement en des groupes d'une quantité déterminée d'objets.

Un tel dispositif trouve principalement son application dans le domaine du convoyage de récipients plus particulièrement de bouteilles.

On connaît par le document DE 43 43 477 un tel dispositif de distribution, lequel comprend, un conduit de guidage articulé et télescopique dont une extrémité est connectée audit convoyeur d'entrée, tandis que l'autre extrémité est portée par un chariot mobile en déplacement dans le sens longitudinal entre ledit convoyeur d'entrée et lesdits convoyeurs de sortie, ainsi que dans le sens transversal, en sorte de pouvoir amener ladite autre extrémité en regard de l'un ou l'autre desdits convoyeurs de sortie.

En fonctionnement, le convoyeur d'entrée délivre un flux continu d'objets qui passent dans le conduit de guidage, tandis que le chariot mobile place l'extrémité de sortie dudit conduit en regard du convoyeur de sortie à alimenter. Lorsque le nombre d'objets à délivrer est atteint, le chariot se déplace latéralement pour se mettre en regard d'un autre convoyeur de sortie à alimenter, mais étant donné que les objets continuent de se déplacer dans le sens longitudinal il convient, lors de ce déplacement transversal, de procéder à un rattrapage au travers d'un déplacement simultané, dans le sens longitudinal en direction dudit convoyeur de sortie, de l'extrémité de sortie dudit conduit. Lorsque l'extrémité de sortie du conduit est en regard du convoyeur de sortie à alimenter, le chariot peut se déplacer longitudinalement en direction du convoyeur d'entrée, afin de reprendre sa position initiale.

Ce dispositif présente des inconvénients du fait du nombre important de pièces en mouvement mises en oeuvre, et notamment au niveau des parties télescopiques. En effet, outre un coût de fabrication élevé, cette conception génère des frais de maintenance importants.

On connaît également par le document EP 1 767 474, un dispositif pour manipuler des objets, qui comprend un convoyeur mobile dans une direction du convoyage pour alimenter en objets une installation comprenant des pinces pour manipuler les objets, mobile longitudinalement et transversalement, ainsi qu'en pivotement selon un axe vertical.

Les pinces prennent en charge individuellement les objets pour les déplacer d'un convoyeur à un autre. Un tel dispositif ne permet pas de gérer des groupes d'objets, ni d'atteindre des cadences élevées. De plus, l'usage de pinces limite l'utilisation à la distribution d'objets tels que des cartons.

La présente invention a pour but de proposer un dispositif de distribution qui permet de remédier à ces divers inconvénients, notamment en ce qu'il est de conception très simple, tout étant d'un fonctionnement aussi efficace.

Le dispositif de distribution selon l'invention, permet d'aiguiller des objets qui circulent en une ou plusieurs files, vers plusieurs voies, il est disposé entre un convoyeur d'entrée sur lequel lesdits objets circulent en une ou plusieurs files, les uns derrière les autres, et un convoyeur de sortie comprenant une pluralité de canaux destinés à être alimentés alternativement en des groupes d'une quantité déterminée d'objets, et il se caractérise essentiellement en ce qu'il comprend d'une part, entre ledit convoyeur d'entrée et ledit convoyeur de sortie, un convoyeur intermédiaire; d'autre part un guide rectiligne constitué d'un élément dont le bord inférieur s'étend à faible distance du plan supérieur dudit convoyeur intermédiaire, et en ce qu'il comprend des moyens d'entraînement dudit guide en translation dans le sens longitudinal, des moyens d'entraînement dudit guide en translation dans le sens transversal, ainsi que des moyens d'entraînement dudit guide en pivotement selon un axe vertical, ledit guide se présentant sous la forme d'un élément de forme plane, disposé selon un plan vertical, et qui permet, au gré de ces différents déplacements, en association avec le déplacement dudit convoyeur intermédiaire, d'orienter et de séparer lesdits objets pour les diriger par groupes vers les canaux dudit convoyeur de sortie.

Selon une caractéristique additionnelle du dispositif de distribution selon l'invention, il comporte un bâti qui s'étend au-dessus du convoyeur intermédiaire, sur lequel peut se déplacer longitudinalement et transversalement un équipage mobile qui porte le guide au travers de moyens aptes à faire pivoter celui-ci autour d'un axe vertical.

Selon une autre caractéristique additionnelle du dispositif de distribution selon l'invention, le guide est porté par deux arbres verticaux, dont l'un est solidaire fixement de l'équipage mobile tout en autorisant pivotement axial, tandis que l'autre est monté sur un bras horizontal lui-même monté pivotant sur ledit équipage mobile, selon un axe vertical.

Selon une autre caractéristique additionnelle du dispositif de distribution selon l'invention, l'équipage mobile comporte un premier chariot mobile dans le sens longitudinal sur le bâti, sous lequel premier chariot peut se déplacer dans le sens transversal un second chariot, lequel porte le guide au travers de moyens aptes à faire pivoter ce dernier selon un axe vertical.

Les avantages et les caractéristiques du dispositif de distribution selon l'invention, ressortiront plus clairement de la description qui suit et qui se rapporte au dessin annexé, lequel en représente un mode de réalisation non limitatif.

Dans le dessin annexé :
- la figure 1 représente une vue schématique partielle en plan d'un dispositif de distribution selon l'invention.
- la figure 2 représente une vue schématique partielle en perspective de dessous, du même dispositif de distribution.
- les figures 3a, 3b, 3c, 3d, 3e et 3f représentent des vues schématiques en plan du même dispositif de distribution dans des phases différentes et successives de fonctionnement.

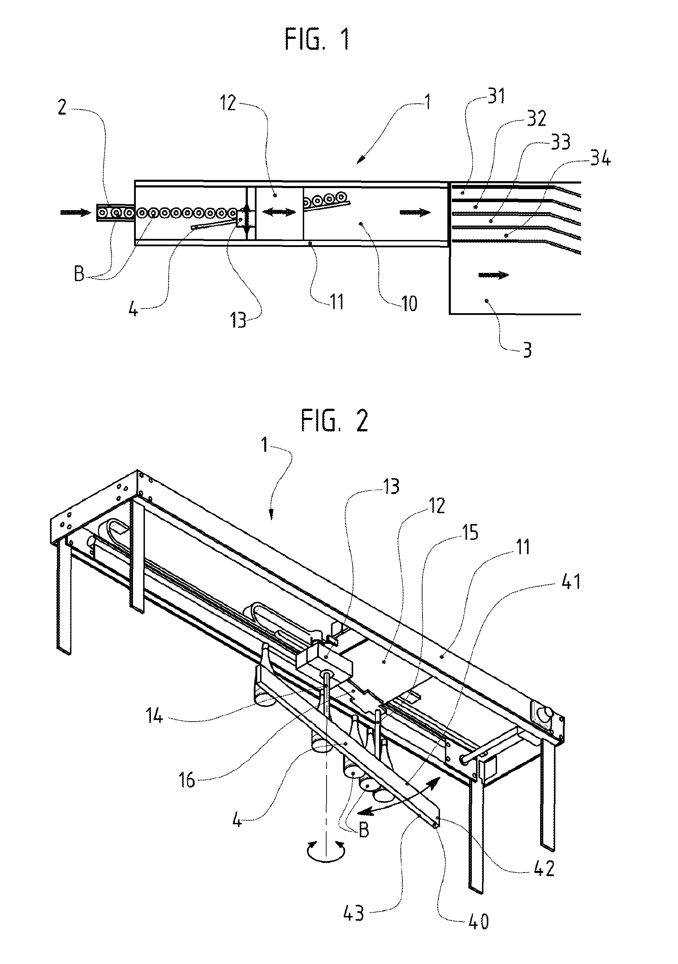

En référence à la figure 1, on peut voir un dispositif de distribution 1 selon l'invention, disposé entre un convoyeur d'entrée 2 et un convoyeur de sortie 3.

Le convoyeur d'entrée 2 conduit une file d'objets B, qui peuvent consister en des bouteilles comme cela est reproduit sur la figure 2, pour amener ceux-ci au dispositif de distribution 1, tandis que le convoyeur de sortie 3 comporte une pluralité de canaux, en l'occurrence quatre canaux 31, 32, 33 et 34, destinés à être alimentés alternativement en des groupes d'une quantité déterminée d'objets B, ces groupes étant créés et aiguillés par le dispositif de distribution 1.

On notera que le nombre de canaux à alimenter est variable selon la nature des objets à traiter, et que dispositif de distribution peut être alimenté en plus d'une file d'objets B.

Le dispositif de distribution 1 comprend d'une part un convoyeur intermédiaire 10 qui s'étend entre le convoyeur d'entrée 2 et le convoyeur de sortie, et relie ceux-ci, et d'autre part un bâti 11, représenté sur la figure 2, qui porte un premier chariot 12 conçu apte à se déplacer longitudinalement sur le bâti 11 au-dessus du convoyeur 10, c'est-à-dire du convoyeur d'entrée 2 vers le convoyeur de sortie 3, et inversement, le premier chariot 12 portant lui-même inférieurement un second chariot 13, conçu apte à se déplacer sur le premier chariot 12, dans le sens transversal, c'est-à-dire perpendiculairement au sens de déplacement du premier chariot 12.

Comme on peut le voir de manière plus précise sur la figure 2, le second chariot 13 comporte inférieurement un guide 4 qui se présente sous la forme d'un élément allongé et relativement plat, éventuellement ajouré, comprenant deux bords longitudinaux 40 et 41, et deux faces rectilignes 42 et 43, éventuellement parallèles, et disposé en sorte que les faces 42 et 43 soient verticales, et que le bord 40 soit en bas.

Le guide 4 est relié au second chariot 13 par l'intermédiaire de deux arbres verticaux parallèles 14 et 15, solidarisés au bord supérieur 41 du guide 4, et de part et d'autre d'une région médiane du guide 4.

L'arbre 14, en l'occurrence celui disposé du côté du convoyeur d'entrée 2, est monté axialement pivotant directement sur le second chariot 13, tandis que l'arbre 15 est monté pivotant sur un bras 16 horizontal lui-même monté pivotant sur le second chariot 13, selon un axe vertical, avantageusement coaxial à l'arbre 14.

On notera que la liaison de l'arbre 14, ou 15, avec le guide 4 peut également être réalisée à l'extrémité du guide 4.

Le guide 4 est donc positionné au-dessus du convoyeur intermédiaire 10, son bord inférieur 40 s'étend à faible distance du plan de ce dernier, et il peut, au travers d'une part du premier chariot 12 et du second chariot 13, être déplacé longitudinalement et transversalement au-dessus du convoyeur intermédiaire, et d'autre part du bras horizontal 16, être orienté angulairement par rapport à l'axe longitudinal du convoyeur intermédiaire 10.

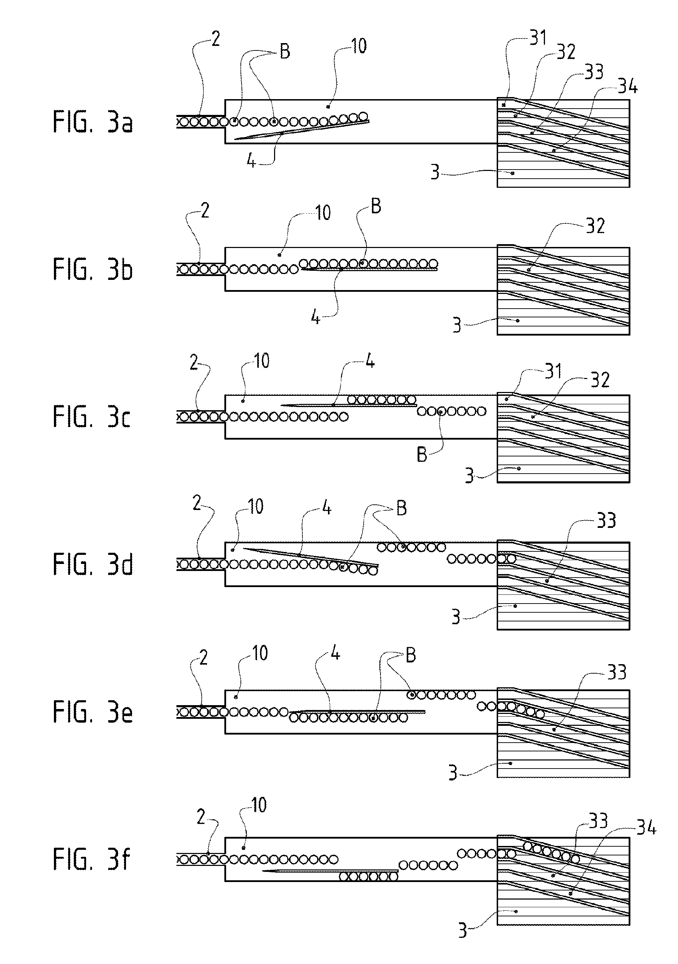

En référence maintenant aux figures 3a, 3b, 3c, 3d, 3e et 3f on peut voir des phases différentes et successives du fonctionnement du dispositif de distribution 1 selon l'invention.

Sur ces figures, on peut voir le convoyeur d'entrée 2, le convoyeur de sortie 3 associé à quatre canaux 31, 32, 33 et 34, tandis que du dispositif de distribution selon l'invention, ne sont représentés que le convoyeur intermédiaire 10 et le guide 4.

Le convoyeur d'entrée 2 amène les objets B les uns derrière les autres jusqu'au convoyeur intermédiaire 10, dans le but de créer des groupes d'objets B, en l'occurrence de six, et d'alimenter successivement les canaux 31, 32, 33 et 34. On notera qu'il est parfaitement possible de créer des groupes successifs d'objets B, qui soient de nombres différents.

Sur la figure 3a, les objets B avancent en file sur le convoyeur intermédiaire 10, et sont déviés par le guide 4 qui est placé sur le côté droit de la file d'objets B issus du convoyeur d'entrée 2, en sorte de les diriger vers le canal 32.

Sur la figure 3b, le guide 4 a déplacé latéralement un ensemble de douze objets B, pour les aligner au droit du canal 32, ce qui a été obtenu par un déplacement longitudinal et transversal du guide 4, coordonné au déplacement des objets B sur le convoyeur 10.

Sur la figure 3c, le guide 4 a laissé s'échapper les six objets B destinés au canal 32, et s'est déplacé transversalement afin de décaler les six objets B suivants au droit du canal 31, tout en se déplaçant en longitudinalement dans le sens inverse du déplacement des objets B, afin de se placer sur le côté gauche de la file d'objets B issus du convoyeur d'entrée 2.

Sur la figure 3d le guide 4, après s'être déplacé longitudinalement vers le convoyeur d'entrée 2, vient au contact des objets B issus de ce dernier, et dans un mouvement de pivotement et de déplacement longitudinal, il dévie la trajectoire des objets B, afin, comme cela est visible sur le figure 3e, de déplacer douze objets B et de la placer au droit du canal 33.

Sur la figure 3f, le guide 4 a laissé s'échapper les six objets B destinés au canal 33, et s'est déplacé transversalement afin de décaler les six objets B suivants au droit du canal 34, tout en se déplaçant en longitudinalement dans le sens inverse du déplacement des objets B, afin de se placer sur le côté droit de la file d'objets B issus du convoyeur d'entrée 2, et ainsi de suite, pour retrouver une configuration équivalente à celle représentée sur la figure 3a.

On comprendra que lors des passages de l'une à l'autre des différentes configurations représentées, le guide 4 se déplace dans le sens longitudinal pour se replacer et rattraper les objets B, afin de compenser les déplacements de ces derniers sur le convoyeur 10.

Le dispositif de distribution selon l'invention est de conception simple, tout en étant aussi efficace que les dispositifs de distribution existants, en sorte que son coût de fabrication est réduit, et ses coûts de maintenance limités.

## Revendications

1. Dispositif de distribution, permettant d'aiguiller des objets (B) qui circulent en une ou plusieurs files, vers plusieurs voies, il est disposé entre un convoyeur d'entrée (2) sur lequel lesdits objets (B) circulent en une ou plusieurs files, les uns derrière les autres, et un convoyeur de sortie (3) comprenant une pluralité de canaux (31, 32, ,33, 34) destinés à être alimentés alternativement en des groupes d'une quantité déterminée d'objets (B), **caractérisé en ce qu'**il comprend d'une part, entre ledit convoyeur d'entrée (2) et ledit convoyeur de sortie (3), un convoyeur intermédiaire (10); d'autre part un guide rectiligne (4) constitué d'un élément dont le bord inférieur (40) s'étend à faible distance du plan supérieur dudit convoyeur intermédiaire (10), et **en ce qu'**il comprend des moyens (12) d'entraînement dudit guide (4) en translation dans le sens longitudinal, des moyens (13) d'entraînement dudit guide (4) en translation dans le sens transversal, ainsi que des moyens (14, 15, 16) d'entraînement dudit guide (4) en pivotement selon un axe vertical, ledit guide (4) se présentant sous la forme d'un élément de forme plane, disposé selon un plan vertical, et qui permet, au gré de ces différents déplacements, en association avec le déplacement dudit convoyeur intermédiaire (10), d'orienter et de séparer lesdits objets (B) pour les diriger par groupes vers les canaux (31, 32, 33, 34) dudit convoyeur de sortie (3).

2. Dispositif de distribution selon la revendication 1, **caractérisé en ce qu'**il comporte un bâti (11) qui s'étend au-dessus du convoyeur intermédiaire (10), sur lequel peut se déplacer longitudinalement et transversalement un équipage mobile (12, 13) qui porte le guide (4) au travers de moyens (14, 15, 16) aptes à faire pivoter celui-ci autour d'un axe vertical.

3. Dispositif de distribution selon la revendication 2, **caractérisé en ce que** le guide (4) est porté par deux arbres verticaux (14, 15), dont l'un (14) est solidaire fixement de l'équipage mobile (12, 13) tout en autorisant pivotement axial, tandis que l'autre (15) est monté sur un bras horizontal (16) lui-même monté pivotant sur ledit équipage mobile (12, 13), selon un axe vertical.

4. Dispositif de distribution selon la revendication 2 ou la revendication 3, **caractérisé en ce que** l'équipage mobile comporte un premier chariot (12) mobile dans le sens longitudinal sur le bâti (11), sous lequel premier chariot (12) peut se déplacer dans le sens transversal un second chariot (13), lequel porte le guide (4) au travers de moyens (14, 15, 16) aptes à faire pivoter ce dernier selon un axe vertical.
